# EUROPÄISCHE PATENTANMELDUNG

(11) **EP 4 671 662 A1**
(43) Veröffentlichungstag der Anmeldung: **31.12.2025**
(21) Anmeldenummer: 25184495.7
(22) Anmeldetag: 23.06.2025
(51) Int. Cl.: F28D 21/00

(54) **WÄRMETAUSCHERMODUL, WÄRMETAUSCHERSYSTEM UND VERFAHREN ZUM HERSTELLEN EINES WÄRMETAUSCHERMODULS**

(30) Priorität: 27.06.2024 DE 102024118193
(71) Anmelder: Uhrig Energie GmbH, 78187 Geisingen (DE)
(72) Erfinder: UHRIG, Thomas, 78187 Geisingen (DE)
(74) Vertreter: Müller-Boré & Partner Patentanwälte PartG mbB

(57) **Zusammenfassung**

Ein Wärmetauschermodul (1) zur Gewinnung von Wärmeenergie aus Abwasser, aufweisend: ein Wärmetauscherelement (10), das zum Einlegen in ein Abwasserrohr (90) ausgebildet ist und in dem ein Arbeitsfluid fließen kann, und eine Fluidleitung (20) zum Zuführen oder Abführen des Arbeitsfluids zum oder vom Wärmetauscherelement (10), wobei das Wärmetauscherelement (10) und die Fluidleitung (20) über eine Verbindungskonfiguration fluidisch miteinander verbindbar sind, wobei die Verbindungskonfiguration aufweist: einen mit dem Wärmetauscherelement (10) verbundenen Stutzen (30), ein mit der Fluidleitung (20) verbundenes Durchgangsrohr (40), das sich durch eine Wandung (22) der Fluidleitung (20) erstreckt, und ein Schraubenelement (50), wobei der Stutzen (30) ein Stutzen-Gewinde und eine Stutzen-Pressfläche (36) aufweist, das Durchgangsrohr (40) eine nach außen gerichtete erste Durchgangsrohr-Pressfläche (42) und eine nach innen gerichtete zweite Durchgangsrohr-Pressfläche (44) aufweist, und das Schraubenelement (50) ein Schraubenelement-Gewinde und eine Schraubenelement-Pressfläche (56) aufweist, und das Stutzen-Gewinde und das Schraubenelement-Gewinde miteinander in Eingriff bringbar sind, um den Stutzen (30) und das Schraubenelement (50) durch das Durchgangsrohr (40) hindurch miteinander zu verschrauben, so dass die Stutzen-Pressfläche (36) an die erste Durchgangsrohr-Pressfläche (42) gepresst wird und die Schraubenelement-Pressfläche (56) an die zweite Durchgangsrohr-Pressfläche (44) gepresst wird, um das Wärmetauscherelement (10) und die Fluidleitung (20) fluiddicht miteinander zu verbinden.

## Beschreibung

Die vorliegende Erfindung betrifft ein Wärmetauschermodul zur Gewinnung von Wärmeenergie aus Abwasser, ein Wärmetauschersystem zur Gewinnung von Wärmeenergie aus Abwasser und ein Verfahren zum Herstellen eines Wärmetauschermoduls zur Gewinnung von Wärmeenergie aus Abwasser.

Wärmetauschermodule werden in diversen Systemen eingesetzt, um Wärmeenergie aus einer Umgebung aufzunehmen und an ein Arbeitsfluid zu übertragen, sodass das erwärmte Arbeitsfluid in einem weiteren Prozess, insbesondere zur Wärmegewinnung bzw. -übertragung, genutzt werden kann. Zwei oder mehrere Wärmetauschermodule können hierbei zu einem Wärmetauschersystem verbunden werden. Bei der aufgenommenen Wärme handelt es sich oft um Abwärme, welche ein (Neben-)Produkt aus vorgelagerten Produktions-, Verarbeitung- oder insbesondere auch Haushalts-Prozessen ist. Diese Abwärme würde anderweitig nicht genutzt werden und ginge demnach verloren. Ein Wärmetauschersystem, mit welches genutzt werden kann, um Wärme aus Abwasser auf ein Arbeitsfluid zu übertragen, ist beispielsweise aus der DE 10 2020 004 061 A1 bekannt.

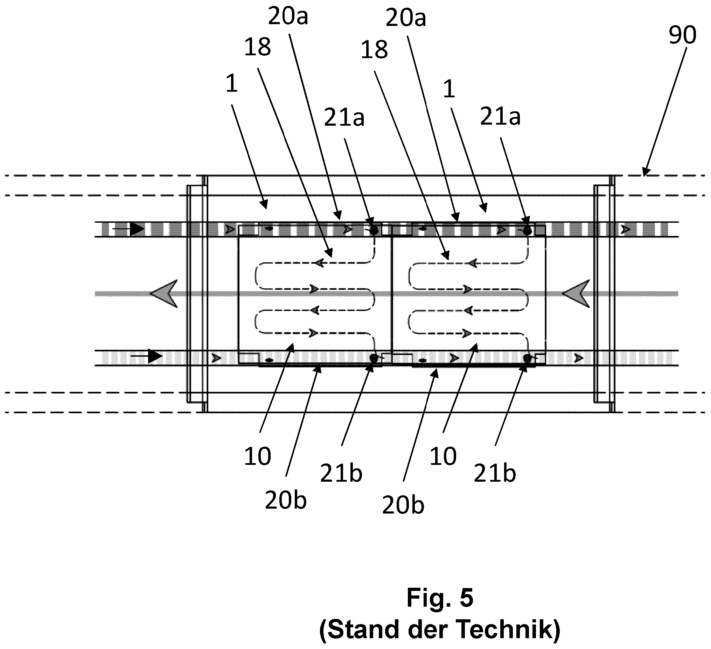

**Figur 5** zeigt ein aus dem Stand der Technik bekanntes Wärmetauschersystem, welches in einem Abwasserrohr 90 angeordnet ist. Das Wärmetauschersystem weist zwei Wärmetauschermodule 1, welche parallel verbunden sind. Hierbei sind die Zuführleitungen 20a und die Abführleitungen 20b der Wärmetauschermodule 1 jeweils miteinander verbunden. Jedes der Wärmetauschermodule 1 weist ein Wärmetauscherelement 10 auf, welches über einen Zuführanschluss 21a mit der Zuführleitung 20a und über einen Zuführanschluss 21b mit der Zuführleitung 20b verbunden ist. Hierbei handelt es sich ausschließlich um Schweißverbindungen. Die Wärmetauscherelemente 10 weisen jeweils eine erste und eine zweite Wärmetauscherplatte 12, 14 auf, welche miteinander verschweißt sind. Innerhalb der Wärmetauscherelement ist jeweils eine Fluidlaufstruktur 18 ausgebildet, durch welche das Arbeitsfluid von der Zuführleitung 20a zur Abführleitung 20b fließen kann.

Ein Einsatzgebiet von derartigen Wärmetauschermodulen ist beispielsweise ein Abwassersystem, welches mit Abwasser aus industriellen Einrichtungen und/oder privaten Haushalten gespeist wird. Hierbei wird versucht, mithilfe eines Wärmetauschermoduls, welches in einem Abwasserrohr des Abwassersystems angeordnet wird, zumindest ein Teil der Wärme des Abwassers aufzunehmen und weiter nutzbar zu machen. Das Wärmetauschermodul wird hierbei in dem Abwasserrohr platziert, um von dem Abwasserrohr umströmt zu werden.

Gerade in Abwassersystemen sind in dem dort geförderten Abwasser jedoch weitere feste Objekte enthalten, welche in dem Wasser nicht gelöst transportiert werden. Ein Beispiel für solche Objekte können gebrauchte Damenhygieneartikel, Windeln, Faserstoffe, Pflanzen, Kunststoffe und andere Gewebe sein. Wird ein Wärmetauschermodul von solchen, insbesondere flexiblen, Objekten mit dem Abwasserrohr strömt, können sich diese an einzelnen Elementen des Wärmetauschermoduls verfangen und so zu einer Verengung und/oder Verstopfung des Abwasserrohr führen. Ferner kann ein Verfangen bzw. Hängenbleiben von Objekten an einzelnen Elementen des Wärmetauschermoduls dazu führen, dass der Widerstand gegen das umströmende Abwasser erhöht ist und so die Stabilität oder strukturelle Integrität des Wärmetauschermoduls und/oder der Wirkungsgrad des Wärmetauschermoduls beeinträchtigt werden kann.

Insbesondere bei der Herstellung eines Wärmetauschermoduls muss beachtet werden, dass die einzelnen Elemente des Wärmetauschermoduls fluiddicht und insbesondere stabil miteinander verbunden sind. Diese fluiddichte Verbindung der einzelnen Elemente stellt Anforderungen an die räumliche Ausgestaltung des Wärmetauschermoduls, wie beispielsweise die Anordnung von Wärmetauscherplatten und Zuführ- bzw. Abführleitungen. Bei der Herstellung herkömmlicher Wärmetauschermodule muss weiter darauf geachtet werden, dass alle Elemente fluiddicht verbunden sind und eine gute Umströmung mit Abwasser gewährleistet werden kann, wobei gleichzeitig jedoch die Gefahr, dass ein, insbesondere flexibles, Objekt, welches mit dem Abwasser transportiert wird, an einem Element des Wärmetauschermoduls hängenbleibt, möglichst reduziert ist.

Es ist demnach eine Aufgabe der Erfindung, ein Wärmetauschermodul sowie ein Verfahren zum Herstellen eines verbesserten Wärmetauschermoduls vorzuschlagen, welches insbesondere stabil ist, einfach herstellbar und montierbar ist und bei dem zudem die Gefahr eines Verfangens bzw. Hängenbleibens von, insbesondere flexiblen, Objekten im Abwasser reduziert wird.

Diese Aufgabe wird durch die Gegenstände der unabhängigen Ansprüche gelöst. Vorteilhafte Weiterbildungen bilden die Gegenstände der abhängigen Ansprüche.

Ein Aspekt betrifft ein Wärmetauschermodul zur Gewinnung von Wärmeenergie aus Abwasser, aufweisend ein Wärmetauscherelement, das zum Einlegen in ein Abwasserrohr ausgebildet ist und in dem ein Arbeitsfluid fließen kann, und eine Fluidleitung zum Zuführen oder Abführen des Arbeitsfluids zum oder vom Wärmetauscherelement, wobei das Wärmetauscherelement und die Fluidleitung über eine Verbindungskonfiguration fluidisch miteinander verbindbar sind, wobei die Verbindungskonfiguration aufweist: einen mit dem Wärmetauscherelement verbundenen Stutzen, ein mit der Fluidleitung verbundenes Durchgangsrohr, das sich durch eine Wandung der Fluidleitung erstreckt, und ein Schraubenelement, wobei der Stutzen ein Stutzen-Gewinde und eine Stutzen-Pressfläche aufweist, das Durchgangsrohr eine nach außen gerichtete erste Durchgangsrohr-Pressfläche und eine nach innen gerichtete zweite Durchgangsrohr-Pressfläche aufweist, und das Schraubenelement ein Schraubenelement-Gewinde und eine Schraubenelement-Pressfläche aufweist, und das Stutzen-Gewinde und das Schraubenelement-Gewinde miteinander in Eingriff bringbar sind, um den Stutzen und das Schraubenelement durch das Durchgangsrohr hindurch miteinander zu verschrauben, so dass die Stutzen-Pressfläche an die erste Durchgangsrohr-Pressfläche gepresst wird und die Schraubenelement-Pressfläche an die zweite Durchgangsrohr-Pressfläche gepresst wird, um das Wärmetauscherelement und die Fluidleitung fluiddicht miteinander zu verbinden.

Durch ein Verbinden der Fluidleitung und dem Wärmetauscherelement kann eine einfache und gleichzeitig sichere und stabile fluiddichte Verbindung ermöglicht werden. Im Vergleich zu anderen Verbindungen, wie einer direkten Schweißverbindung von Fluidleitung und Wärmetauscherelement mit einem Verbindungselement, welche einen ausreichend großen Abstand zwischen Fluidleitung und Wärmetauscherelement und eine ausreichende Zugänglichkeit der Schweißbereiche voraussetzt, kann der Abstand zwischen Fluidleitung und Wärmetauscherelement reduziert werden. Der Stutzen kann an das Wärmetauscherelement angebracht werden, bevor Fluidleitung und Wärmetauscherelement miteinander über die Verbindungskonfiguration verbunden werden. Ebenso kann das Durchgangsrohr vorher in der Fluidleitung angeordnet werden und mit dieser verbunden werden. So kann der Abstand zwischen Wärmetauscherelement und Fluidleitung reduziert werden, da die einzelnen Elemente vor einem Verbinden verschweißt werden.

Ferner kann die Verbindungskonfiguration sowohl in einem Randbereich als auch in einem zentralen Bereich des Wärmetauscherelements angeordnet sein, da das Verbinden des Stutzens und Schraubenelements lediglich eine Zugänglichkeit des Schraubenelements innerhalb der Fluidleitung voraussetzt. Somit kann ein vergleichsweise kompaktes Wärmetauschermodul ermöglicht werden bzw. die Design-Freiheit des Wärmetauschermoduls erhöht werden.

Ferner wird somit ermöglicht, dass das Wärmetauscherelement und die Fluidleitung durch die Verbindungskonfiguration, im Gegensatz zu einer klassischen dauerhaften Verbindung wie beispielsweise eine Schweißverbindung, wieder voneinander getrennt werden können. Somit kann nicht nur das Einlegen in ein Abwasserrohr vereinfacht werden, sondern es können auch einzelne Elemente ausgetauscht werden, was eine Instandhaltung und/oder Reparatur vereinfachen kann.

Das Wärmetauscherelement ist zum Einlegen in ein Abwasserrohr ausgebildet. Hierbei kann das Wärmetauscherelement derart geformt sein, dass es an ein genormtes Abwasserrohr angepasst ist. Insbesondere kann das Wärmetauscherelement eine gebogene Form aufweisen.

Das Wärmetauscherelement ist derart ausgebildet, dass in ihm ein Arbeitsfluid fließen kann. Mit anderen Worten kann das Wärmetauscherelement als Hohlkörper ausgebildet sein, durch welchen des Arbeitsfluid fließen kann. Das Wärmetauscherelement kann hierbei zumindest zwei verbundene, insbesondere stoffschlüssig verbundene, bevorzugt verschweißte oder verlötete, Wärmetauscherplatten umfassen. Die Wärmetauscherplatten können insbesondere mittels Laser-Schweißen verbunden sein. Das Wärmetauscherelement kann im Innern eine Volumen- und/oder Fluidlaufstruktur aufweisen.

Eine oder mehrere der Wärmetauscherplatten kann/können hierbei eine Metallplatte aufweisen oder sein, insbesondere ein Blech aufweisen oder sein. Insbesondere kann/können eine oder mehrere der Wärmetauscherplatten Eisen, Stahl, Edelstahl, Aluminium, Messing und/oder Kupfer, aufweisen oder daraus gebildet sein.

Die Fluidleitung ist insbesondere zum Zuführen oder Abführen des Arbeitsfluids zum oder vom Wärmetauscherelement ausgebildet. Mit anderen Worten kann über die Fluidleitung das Arbeitsfluid in den oder aus dem Innenraum des Wärmetauscherelements geführt werden.

Die Fluidleitung kann hierbei als Rohr und/oder hohlzylindrisch ausgebildet sein. Insbesondere kann die Fluidleitung Metall, insbesondere Eisen, Stahl, Edelstahl, Aluminium, Messing und/oder Kupfer, aufweisen oder daraus gebildet sein.

Die Fluidleitung kann einen oder mehrere Anschlüsse aufweisen, durch welche das Arbeitsfluid durch die Fluidleitung gefördert werden kann. Zudem kann die Fluidleitung mit einer weiteren Fluidleitung, insbesondere eines weiteren Wärmetauschermoduls, verbindbar sein.

Das Arbeitsfluid kann eine Flüssigkeit sein, insbesondere Wasser oder ein Wassergemisch. Insbesondere kann das Arbeitsfluid ein Wasser-Glykol-Gemisch aufweisen oder sein. Dies ermöglicht, dass bei einer Undichtigkeit, beispielsweise durch Beschädigung eines oder mehrerer Elemente, das austretende Arbeitsfluid die Wasserqualität nicht gefährdet oder verschlechtert. Zudem kann ermöglicht werden, dass das Arbeitsfluid so auch bei niedrigen Temperaturen unter dem Gefrierpunkt von Wasser zumindest flüssig bleibt.

Das Wärmetauscherelement und die Fluidleitung sind über die Verbindungskonfiguration fluidisch miteinander verbindbar. Die Verbindungskonfiguration weist hierbei den Stutzen, das Durchgangsrohr und das Schraubenelement auf. Das Durchgangsrohr weist eine nach außen gerichtete erste Durchgangsrohr-Pressfläche auf.

Der Begriff "nach außen" bezeichnet hierbei eine Richtung in eine Umgebung außerhalb der Fluidleitung und der Begriff "nach innen" eine Richtung in einen Innenraum innerhalb der Fluidleitung, durch welchen das Arbeitsfluids durch die Fluidleitung geführt wird. Beispielsweise kann die Axialrichtung des Durchgangsrohrs etwa mit einer Radialrichtung der Fluidleitung übereinstimmen bzw. etwa parallel dazu sein. Die erste Durchgangsrohr-Pressfläche ist insbesondere außerhalb der Fluidleitung angeordnet, und die zweite Durchgangsrohr-Pressfläche ist insbesondere innerhalb der Fluidleitung angeordnet.

Somit können das Wärmetauscherelement und die Fluidleitung über die Verbindungskonfiguration derart fluidisch miteinander verbunden werden, dass das Wärmetauscherelement mit dem Stutzen außerhalb der Fluidleitung und das Schraubenelement innerhalb der Fluidleitung angeordnet sind.

Der Stutzen kann ein Metall, insbesondere Eisen, Stahl, Edelstahl, Aluminium, Messing und/oder Kupfer, aufweisen oder daraus gebildet sein.

Das Stutzen-Gewinde und das Schraubenelement-Gewinde sind miteinander in Eingriff bringbar, um den Stutzen und das Schraubenelement durch das Durchgangsrohr hindurch miteinander zu verschrauben. Durch das Verschrauben können die Stutzen-Pressfläche und die erste Durchgangsrohr-Pressfläche außerhalb der Fluidleitung aneinandergepresst werden und die Schraubenelement-Pressfläche und die zweite Durchgangsrohr-Pressfläche innerhalb der Fluidleitung aneinandergepresst werden. Hierdurch können das Wärmetauscherelement und die Fluidleitung fluiddicht miteinander verbunden werden. Mit anderen Worten kann durch das Verschrauben eine Vorspannung erzeugt werden, welche die Stutzen-Pressfläche an die erste Durchgangsrohr-Pressfläche und die Schraubenelement-Pressfläche an die zweite Durchgangsrohr Pressfläche derart pressen, dass die Fluidleitung und das Wärmetauscherelement fluiddicht miteinander verbunden sind. Mit nochmal anderen Worten kann das Durchgangsrohr zwischen dem Stutzen und dem Schraubenelement eingeklemmt werden. Die Gewinde können beim Verschrauben mit einem abdichtenden Kleber versehen werden, was die Dichtigkeit und Haltbarkeit der Verbindung weiter verbessern kann.

Die Stutzen-Pressfläche und die erste Durchgangsrohr-Pressfläche und/oder die Schraubenelement-Pressfläche und die zweite Durchgangsrohr-Pressfläche können hierbei im Wesentlichen parallel zueinander ausgerichtet sein. Hierbei können die Stutzen-Pressfläche und die erste Durchgangsrohr-Pressfläche und/oder die Schraubenelement-Pressfläche und die zweite Durchgangsrohr-Pressfläche im Wesentlichen plan sein. Dies kann eine gute Abdichtung bei einfacher Fertigung ermöglichen.

Alternativ kann zumindest je eine der Stutzen-Pressfläche und der ersten Durchgangsrohr-Pressfläche und/oder der Schraubenelement-Pressfläche und der zweiten Durchgangsrohr-Pressfläche konisch ausgebildet sein, wobei die konische Pressfläche gegen eine Innenkante der anderen Pressfläche gepresst wird. Somit kann eine verbesserte Abdichtung erzielt werden.

Beispielhaft kann der Stutzen eine Durchführung aufweisen, das Schraubenelement kann als Hohlkörper ausgebildet sein, und das Arbeitsfluid kann bei verbundenem Zustand des Stutzens und des Schraubenelements durch die Durchführung des Stutzens und durch das Schraubenelement zwischen Wärmetauscherelement und Fluidleitung fließen.

Der Stutzen kann mit dem Wärmetauscherelement stoffschlüssig, insbesondere mittels Schweißen oder Löten, verbunden sein. Zudem oder alternativ kann das Durchgangsrohr mit der Fluidleitung stoffschlüssig, insbesondere mittels Schweißen oder Löten, verbunden sein.

Somit kann das Wärmetauscherelement mit dem Stutzen bzw. die Fluidleitung mit dem Durchgangsrohr auf einfache und automatisierte Art hergestellt werden. Das Wärmetauscherelement und oder die Fluidleitung können hierbei in, insbesondere separaten, automatisierten Schritten vorbereitet werden, bevor diese dann fluiddicht miteinander verbunden werden. Eine stoffschlüssige Verbindung ermöglicht hierbei ein fluiddichtes Zu- und/oder Abführen des Arbeitsfluids zu bzw. von dem Wärmetauscherelement, wobei es sich um eine besonders langlebige Verbindung handelt. Das Durchgangsrohr kann einen Abschnitt mit vergrößertem Außendurchmesser aufweisen, welcher der Außenkontur der Fluidleitung angepasst ist und somit im Wesentlichen vollumfänglich auf der Fluidleitung aufliegt, insbesondere um die hierfür vorgesehene Ausnehmung der Fluidleitung herum. Dies kann die Herstellung vereinfachen, da auf einfache Weise eine korrekte Positionierung bzw. Ausrichtung des Durchgangsrohres zur Fluidleitung beim Verbindungsprozess sichergestellt werden kann.

Es kann sich bei der stoffschlüssigen Verbindung von dem Stutzen mit dem Wärmetauscherelement und/oder dem Durchgangsrohr mit der Fluidleitung insbesondere um eine Laser-Schweißverbindung handeln. Dies kann ermöglichen, dass die einzelnen Elemente präzise und ohne notwendigen Kontakt beim Verschweißen miteinander verbunden werden.

Ferner kann der Stutzen stufenförmig mit einer Stufe ausgebildet sein, die Stufe die Stutzen-Pressfläche bilden, und der Stutzen einen Stutzen-Einführ-Abschnitt mit einem Gewinde, insbesondere dem Stutzen-Gewinde, und mit reduziertem Durchmesser aufweisen, welcher in das Durchgangsrohr einführbar ist. Der Stutzen kann ferner Wärmetauscherelement-seitig einen Stutzen-Anbring-Abschnitt aufweisen, wobei der Durchmesser des Stutzen-Einführ-Abschnitts kleiner ist als der Durchmesser des Stutzen-Anbring-Abschnitts, und wobei an dem Übergang von dem Stutzen-Anbring-Abschnitt zu dem Stutzen-Einführ-Abschnitt die Stutzen-Pressfläche ausgebildet sein kann.

Insbesondere kann der Stutzen im wesentlichen hohlzylinderförmig ausgebildet sein und der Stutzen-Einführ-Abschnitt einen reduzierten Außendurchmesser aufweisen.

Alternativ kann die Stutzen-Pressfläche eine von dem Wärmetauscherelement abgewandte axiale Stutzen-Stirnfläche sein. Mit anderen Worten kann der Stutzen ohne Stufe gebildet sein.

Somit kann eine einfache Herstellung des Stutzens, insbesondere als Drehbauteil, ermöglicht werden. Durch ein Vorsehen eines Stutzen-Einführ-Abschnitts mit reduziertem Durchmesser kann weiter ermöglicht werden, dass der Stutzen einfach innerhalb des Durchgangsrohres angeordnet/positioniert werden kann, um ein Verbinden von Wärmetauscherelement und Fluidleitung zu vereinfachen. Ferner kann hierdurch eine sichere Verbindung von Stutzen und Schraubenelement ermöglicht werden.

Ferner kann das Schraubenelement einen Schraubenelement-Einführ-Abschnitt mit einem Gewinde, insbesondere dem Schraubenelement-Gewinde, und einen Kopfabschnitt aufweisen. An dem Übergang von dem Schraubenelement-Einführ-Abschnitt zu dem Kopfabschnitt kann die Schraubenelement-Pressfläche ausgebildet sein. Insbesondere ist ein Durchmesser des Schraubenelement-Einführ-Abschnitts kleiner als ein Durchmesser des Kopfabschnitts. Der Schraubenelement-Einführ-Abschnitt kann in das Durchgangsrohr einführbar sein.

Der Kopfabschnitt kann ferner ein Antriebsprofil aufweisen. Insbesondere kann das Antriebsprofil an einer Innenseite oder Außenseite des Kopfabschnitts ausgebildet sein. Ferner kann das Antriebsprofil eine mehrflächige bzw. polygonale Form, insbesondere eine Sechskant-Form, aufweisen.

Insbesondere kann das Schraubenelement im Wesentlichen hohlzylinderförmig ausgebildet sein und der Schraubenelement-Einführ-Abschnitt einen reduzierten Außendurchmesser aufweisen.

Somit kann eine Einfache Herstellung des Schraubenelements, insbesondere als Drehbauteil, ermöglicht werden. Durch ein Vorsehen eines Schraubenelement-Einführ-Abschnitts mit reduziertem Durchmesser kann weiter ermöglicht werden, dass der Stutzen einfach innerhalb des Durchgangsrohres angeordnet/positioniert werden kann, um ein Verbinden von Wärmetauscherelement und Fluidleitung zu vereinfachen. Ferner kann hierdurch eine sichere Verbindung von Stutzen und Schraubenelement ermöglicht werden.

Ferner kann das Durchgangsrohr im wesentlichen hohlzylinderförmig ausgebildet sein, wobei ein Innendurchmesser des Durchgangsrohrs größer oder gleich sein kann als ein, insbesondere zumindest abschnittsweiser, (Außen-)Durchmesser des Stutzen-Einführ-Abschnitts und/oder des Schraubenelement-Einführ-Abschnitts. Die erste und zweite Durchgangsrohr-Pressfläche können durch die axialen Stirnflächen des Durchgangsrohres gebildet werden.

Insbesondere können der (Außen-)Durchmesser des Stutzen-Einführ-Abschnitts und/oder des Schraubenelement-Einführ-Abschnitts gleich oder bis zu 5 mm, bevorzugt bis zu etwa 4 mm, weiter bevorzugt bis zu etwa 3 mm, besonders bevorzugt bis zu etwa 2 mm, weiter besonders bevorzugt bis zu etwa 1 mm kleiner sein als der Innendurchmesser des Durchgangsrohres. Insbesondere kann der Stutzen-Einführ-Abschnitt formschlüssig oder kraftschlüssig in dem Durchgangsrohr angeordnet werden.

Somit kann eine möglichst einfache Anordnung/Positionierung des Stutzens und/oder Schraubenelements in dem Durchgangsrohr ermöglicht werden.

Ferner kann das Durchgangsrohr derart mit der Fluidleitung verbunden sein, dass sich das Durchgangsrohr in Radialrichtung der Fluidleitung durch die Wandung erstreckt. Mit anderen Worten kann sich das Durchgangsrohr quer zur Axialrichtung der Fluidleitung erstrecken.

Ferner kann ein (Außen-)Durchmesser der Stutzen-Pressfläche und/oder der Schraubenelement-Pressfläche im Wesentlichen einem Außendurchmesser des Durchgangsrohres entsprechen. Somit kann ein möglichst ebener Übergang erzielt werden, wobei insbesondere an dem Übergang zwischen Stutzen und Durchgangsrohr die Gefahr verringert werden kann, dass Objekte sich verfangen und/oder hängen bleiben.

Ferner kann der Stutzen ein Innengewinde und das Schraubenelement ein Außengewinde aufweisen. Mit anderen Worten kann das Stutzen-Gewinde als Innengewinde und das Schraubenelement-Gewinde als Außengewinde ausgebildet sein.

Hierdurch können Fluidleitung und Wärmetauscherelement einfach miteinander verbunden werden, wobei die einzelnen Elemente der Verbindungskonfiguration beim Verbinden besonders vor Beschädigung geschützt sind. Es kann insbesondere ermöglicht werden, dass der Stutzen (an welchem das Wärmetauscherelement angeordnet ist) mit dem Innengewinde innerhalb des Durchgangsrohres angeordnet wird und danach nur noch das Schraubenelement in das Durchgangsrohr eingeführt werden muss, sodass ein Beschädigen des Gewindes des Stutzens durch das Durchgangsrohr verhindert werden kann.

Alternativ kann der Stutzen ein Außengewinde und das Schraubenelement ein Innengewinde aufweisen. Mit anderen Worten kann das Stutzen-Gewinde als Außengewinde und das Schraubenelement-Gewinde als Innengewinde ausgebildet sein.

Ferner kann zwischen der Stutzen-Pressfläche und der ersten Durchgangsrohr-Pressfläche und/oder zwischen der Schraubenelement-Pressfläche und der zweiten Durchgangsrohr-Pressfläche jeweils ein Dichtungselement anordenbar sein. Hierbei kann die Verbindungskonfiguration das Dichtungselement umfassen. Das Dichtungselement kann insbesondere als O-Ring und/oder als Dichtmasse ausgebildet sein.

Das Vorsehen eines Dichtungselements kann hierbei die Dichtigkeit der Verbindungskonfiguration verbessern und/oder ermöglichen, Fluiddichtigkeit bereits bei einem niedrigeren Anpressdruck zwischen den Pressflächen durch die Verschraubung von Stutzen und Schraubenelement zu erreichen. Somit kann die mechanische Belastung der einzelnen Komponenten reduziert werden.

Alternativ kann auf ein Dichtungselement verzichtet werden, wenn beispielsweise die Temperatur und oder die (chemische) Zusammensetzung von Abwasser oder Arbeitsfluid die strukturelle Integrität eines Dichtungselement negativ beeinflussen kann. Hierbei kann durch einen erhöhten Anpressdruck eine fluiddichte Verbindungskonfiguration ermöglicht werden, welche dann auch bei entsprechenden Bedingungen einsetzbar ist.

Ferner kann die eine Fluidleitung eine Zuführleitung zum Zuführen des Arbeitsfluids zum Wärmetauscherelement sein, das Wärmetauschermodul kann weiter eine Abführleitung zum Abführen des Arbeitsfluids vom Wärmetauscherelement aufweisen, und das Wärmetauscherelement und die Abführleitung können über eine weitere Verbindungskonfiguration fluidisch miteinander verbindbar sind. Mit anderen Worten kann das Wärmetauschermodul eine weitere Fluidleitung aufweisen, welche eine Abführleitung zum Abführen des Arbeitsfluids vom Wärmetauscherelement sein kann.

Mit anderen Worten kann die weitere Verbindungskonfiguration einen weiteren mit dem Wärmetauscherelement verbundenen Stutzen, und ein weiteres mit der Abführleitung verbundenes Durchgangsrohr, das sich durch eine Wandung der Abführleitung erstreckt, und ein weiteres Schraubenelement aufweisen.

Der weitere Stutzen kann hierbei wie der Stutzen ausgebildet sein, dass weitere Durchgangsrohr kann hierbei wie das Durchgangsrohr ausgebildet sein, und das weitere Schraubenelement kann hierbei wie das Schraubenelement ausgebildet sein.

Mit anderen Worten kann der weitere Stutzen ein Stutzen-Gewinde und eine Stutzen-Pressfläche aufweisen. Das weitere Durchgangsrohr kann eine nach außen gerichtete erste Durchgangsrohr-Pressfläche und eine nach innen gerichtete zweite Durchgangsrohr-Pressfläche aufweisen. Das weitere Schraubenelement kann ein Schraubenelement-Gewinde und eine Schraubenelement-Pressfläche aufweisen. Das Stutzen-Gewinde und das Schraubenelement-Gewinde können miteinander in Eingriff bringbar sein, um den weiteren Stutzen und das weitere Schraubenelement durch das weitere Durchgangsrohr hindurch miteinander zu verschrauben, so dass die Stutzen-Pressfläche an die erste Durchgangsrohr-Pressfläche gepresst wird und die Schraubenelement-Pressfläche an die zweite Durchgangsrohr-Pressfläche gepresst wird, um das Wärmetauscherelement und die Abführleitung fluiddicht miteinander zu verbinden.

Somit kann ermöglicht werden, eine Konfiguration bereitzustellen, bei welcher sowohl während des Zuführens als auch des Abführens des Arbeitsfluids zum bzw. vom Wärmetauscherelement eine möglichst stabile und einfach herstellbare fluiddichte Verbindung bereitgestellt werden kann, wobei zusätzlich die Gefahr, dass Objekte im Abwasser an den Verbindungsstellen des Wärmetauscherelements und der Fluidleitungen hängen bleiben, reduziert ist.

Ferner kann die erste Durchgangsrohr-Pressfläche und/oder die zweite Durchgangsrohr-Pressfläche als eine Stirnfläche des Durchgangsrohres ausgebildet sein. Das Durchgangsrohr kann insbesondere hohlzylinderförmig ausgebildet sein.

Alternativ kann die erste Durchgangsrohr-Pressfläche und/oder die zweite Durchgangsrohr-Pressfläche als Stufe ausgebildet sein.

Somit kann eine einfache Abdichtung an der ersten und/oder zweiten Durchgangsrohr-Pressfläche ermöglicht werden. Ferner kann so das Durchgangsrohr einfach, insbesondere als Drehbauteil, gefertigt werden.

Das Durchgangsrohr kann ein Metall, insbesondere Eisen, Stahl, Edelstahl, Aluminium, Messing und/oder Kupfer, aufweisen oder daraus gebildet sein.

Das Durchgangsrohr kann einen zur Fluidleitung reduzierten Durchmesser aufweisen.

Beispielsweise kann die Fluidleitung einen Durchmesser von etwa 3 cm bis etwa 15 cm aufweisen, wogegen das Durchgangsrohr beispielsweise einen Durchmesser von etwa 0,5 cm bis etwa 3 cm aufweisen kann. Insbesondere kann die Querschnittsfläche der Fluidleitung etwa 2-fach, insbesondere etwa 3-fach, insbesondere etwa 5-fach, insbesondere etwa 10-fach, insbesondere etwa 15-fach, insbesondere etwa 20-fach, größer sein als die Querschnittsfläche des Durchgangsrohres. Somit kann eine Fluidleitung ausreichend Arbeitsfluid leiten, um ein Wärmetauschersystem bestehend aus einer Mehrzahl von Wärmetauschermodulen ausreichend und effektiv zu versorgen.

Ferner kann ein Abstand zwischen der Fluidleitung und dem Wärmetauscherelement in einem fluiddicht verbundenen Zustand kleiner als etwa 2 cm, kleiner als etwa 1,5 cm, kleiner als etwa 1 cm, oder kleiner als etwa 0,5 cm sein.

Durch den reduzierten Abstand kann insbesondere im Vergleich zu einem Wärmetauschermodul, bei welchem Wärmetauscherelement und Fluidleitung ausschließlich über beispielsweise Schweißverbindungen miteinander verbunden sind, die Gefahr reduziert werden, dass mit dem Abwasser transportierte Objekte zwischen der Fluidleitung und dem Wärmetauscherelement hängenbleiben.

Ferner kann die Verbindungskonfiguration fluiddicht sein bis zumindest etwa 10 bar, bevorzugt etwa 15 bar, weiter bevorzugt etwa 20 bar, besonders bevorzugt etwa 25 bar, weiter besonders bevorzugt etwa 40 bar.

Das Wärmetauschermodul kann neben der Gewinnung von Wärmeenergie aus Abwasser auch derart eingesetzt werden, dass Wärmeenergie aus dem Arbeitsfluid an das Abwasser abgegeben wird, um beispielsweise das Einfrieren von Abwasser zu verhindern.

Ein weiterer Aspekt betrifft ein Wärmetauschersystem zur Gewinnung von Wärmeenergie aus Abwasser, aufweisend zwei oder mehr Wärmetauschermodule gemäß dem oben genannten Aspekt, wobei die zwei oder mehr Wärmetauschermodule parallel und/oder in Reihe verbindbar sind.

Zwei oder mehr Wärmetauschermodule des Wärmetauschersystem können parallel verbindbar sein. Mit anderen Worten können die Wärmetauschermodule jeweils eine Zuführleitung und eine Abführleitung aufweisen und das Wärmetauschersystem kann eine System-Zuführleitung aufweisen, mit welcher die Zuführleitungen der Wärmetauschermodule fluidisch verbindbar sein können. Alternativ können die Zuführleitungen miteinander verbunden sein und die System-Zuführleitung bilden Weiter kann das Wärmetauschersystem eine System-Abführleitung aufweisen, mit welcher die Abführleitungen der Wärmetauschermodule fluidisch verbindbar sein können.

Zudem oder alternativ können zwei oder mehr Wärmetauschermodule des Wärmetauschersystem in Reihe verbindbar sein. Mit anderen Worten können die Wärmetauschermodule jeweils eine Zuführleitung und eine Abführleitung aufweisen, wobei eine Zuführleitung eines Wärmetauschermoduls mit einer Abführleitung eines anderen Wärmetauschermoduls fluidisch verbindbar sein kann.

Je nach Ausgestaltung eines Abwasserrohres, in welchem das Wärmetauschersystem angeordnet werden soll, kann somit eine möglichst gute Gewinnung von Wärmeenergie aus dem Abwasser ermöglicht werden, wobei die Gefahr, dass in dem Abwasser transportierte Objekte an Elementen des Wärmetauschersystem hängenbleiben, reduziert ist.

Das Wärmetauschersystem kann neben der Gewinnung von Wärmeenergie aus Abwasser auch derart eingesetzt werden, dass Wärmeenergie aus dem Arbeitsfluid an das Abwasser abgegeben wird, um beispielsweise das Einfrieren von Abwasser zu verhindern.

Ein weiterer Aspekt betrifft ein Verfahren zum Herstellen eines Wärmetauschermoduls zur Gewinnung von Wärmeenergie aus Abwasser, aufweisend die Schritte: Bereitstellen eines Wärmetauscherelements, das zum Einlegen in ein Abwasserrohr ausgebildet ist und in dem ein Arbeitsfluid fließen kann, wobei das Wärmetauscherelement einen Stutzen aufweist und der Stutzen ein Stutzen-Gewinde und eine Stutzen-Pressfläche aufweist, Bereitstellen einer Fluidleitung zum Zuführen oder Abführen des Arbeitsfluids zum oder vom Wärmetauscherelement, wobei die Fluidleitung ein Durchgangsrohr aufweist, das sich durch eine Wandung der Fluidleitung erstreckt, und wobei das Durchgangsrohr eine nach außen gerichtete erste Durchgangsrohr-Pressfläche und eine nach innen gerichtete zweite Durchgangsrohr-Pressfläche aufweist, Bereitstellen eines Schraubenelements, wobei das Schraubenelement ein Schraubenelement-Gewinde und eine Schraubenelement-Pressfläche aufweist und wobei das Stutzen-Gewinde und das Schraubenelement-Gewinde miteinander in Eingriff bringbar sind, und Verschrauben des Schraubenelements und des Stutzens miteinander durch das Durchgangsrohr hindurch, so dass die Stutzen-Pressfläche an die erste Durchgangsrohr-Pressfläche gepresst wird und die Schraubenelement-Pressfläche an die zweite Durchgangsrohr-Pressfläche gepresst wird, um das Wärmetauscherelement und die Fluidleitung fluiddicht miteinander zu verbinden.

Das Verfahren kann insbesondere ein Verfahren zum Herstellen eines Wärmetauschermoduls gemäß dem oben genannten Aspekt sein. Das Wärmetauschermodul kann insbesondere gemäß dem oben genannten Aspekt fortgebildet sein.

Das so hergestellte Wärmetauschermodul kann eine fluiddichte Verbindung der Fluidleitung und dem Wärmetauscherelement aufweisen, welche einfach und gleichzeitig sicher und stabil ist. Im Vergleich zu anderen Verbindungen, wie einer direkten Schweißverbindung von Fluidleitung und Wärmetauscherelement mit einem Verbindungselement, welche einen ausreichend großen Abstand zwischen Fluidleitung und Wärmetauscherelement und eine ausreichende Zugänglichkeit der Schweißbereiche voraussetzt, kann der Abstand zwischen Fluidleitung und Wärmetauscherelement reduziert werden.

Ferner wird somit ermöglicht, dass das Wärmetauscherelement und die Fluidleitung, im Gegensatz zu einer dauerhaften Verbindung wie beispielsweise eine Schweißverbindung, wieder voneinander getrennt werden können. Somit kann nicht nur das Einlegen in ein Abwasserrohr vereinfacht werden, sondern es können auch einzelne Elemente ausgetauscht werden, was eine Instandhaltung und/oder Reparatur vereinfachen kann.

Die Schritte des Verfahrens können insbesondere in der folgenden Reihenfolge 1), 2), 3) und 4) ausgeführt werden:
1) Bereitstellen eines Wärmetauscherelements, das zum Einlegen in ein Abwasserrohr ausgebildet ist und in dem ein Arbeitsfluid fließen kann, wobei das Wärmetauscherelement einen Stutzen aufweist und der Stutzen ein Stutzen-Gewinde und eine Stutzen-Pressfläche aufweist,
2) Bereitstellen einer Fluidleitung zum Zuführen oder Abführen des Arbeitsfluids zum oder vom Wärmetauscherelement, wobei die Fluidleitung ein Durchgangsrohr aufweist, das sich durch eine Wandung der Fluidleitung erstreckt, und wobei das Durchgangsrohr eine nach außen gerichtete erste Durchgangsrohr-Pressfläche und eine nach innen gerichtete zweite Durchgangsrohr-Pressfläche aufweist,
3) Bereitstellen eines Schraubenelements, wobei das Schraubenelement ein Schraubenelement-Gewinde und eine Schraubenelement-Pressfläche aufweist und wobei das Stutzen-Gewinde und das Schraubenelement-Gewinde miteinander in Eingriff bringbar sind, und
4) Verschrauben des Schraubenelements und des Stutzens miteinander durch das Durchgangsrohr hindurch, so dass die Stutzen-Pressfläche an die erste Durchgangsrohr-Pressfläche gepresst wird und die Schraubenelement-Pressfläche an die zweite Durchgangsrohr-Pressfläche gepresst wird, um das Wärmetauscherelement und die Fluidleitung fluiddicht miteinander zu verbinden.

Die Schritte 1) und 2) können alternativ auch zeitgleich oder in der Reihenfolge 2) und 1) erfolgen.

Hierbei kann ein Schritt des Herstellens einer Verbindungskonfiguration, über die das Wärmetauscherelement und die Fluidleitung fluidisch miteinander verbindbar sind, die Schritte des Bereitstellens des Schraubenelements und des Verschraubens des Schraubenelements und des Stutzens aufweisen. Insbesondere kann der Schritt des Herstellens eine Verbindungskonfiguration als Schritt 3.0) nach den Schritten 1) und 2) ausgeführt werden.

Ferner kann das Bereitstellen des Wärmetauscherelements umfassen:
Bereitstellen von zumindest zwei Wärmetauscherplatten,
Erzeugen einer, insbesondere kreisförmigen, Platten-Ausnehmung in einer der Wärmetauscherplatten, und
stoffschlüssiges Anbringen des Stutzens an der einen Wärmetauscherplatte derart, dass der Stutzen die Platten-Ausnehmung bedeckt und das Arbeitsfluid durch die Platten-Ausnehmung und den Stutzen fließen kann.

Hierbei können die Schritte als Teil von Schritt 1) in der folgenden Reihenfolge ausgeführt werden:
1.1) Bereitstellen von zumindest zwei Wärmetauscherplatten,
1.2) Erzeugen einer, insbesondere kreisförmigen, Platten-Ausnehmung in einer der Wärmetauscherplatten, und
1.3) stoffschlüssiges Anbringen des Stutzens an der einen Wärmetauscherplatte derart, dass der Stutzen die Platten-Ausnehmung bedeckt und das Arbeitsfluid durch die Platten-Ausnehmung und den Stutzen fließen kann.

Eine oder mehrere der Wärmetauscherplatten können hierbei eine Metallplatte aufweisen oder sein, insbesondere ein Blech aufweisen oder sein. Insbesondere kann eine oder mehrerer der Wärmetauscherplatten Eisen, Stahl, Edelstahl, Aluminium, Messing und/oder Kupfer, aufweisen oder daraus gebildet sein.

Das Erzeugen der, insbesondere kreisförmigen, Platten-Ausnehmung kann mechanisch, insbesondere durch Bohren, Stanzen, Fräsen oder Schneiden, oder thermisch, insbesondere durch Brennen, Schmelzen oder Lasern, erfolgen.

Das stoffschlüssige Anbringen des Stutzens an der einen Wärmetauscherplatte kann derart erfolgen, dass der Stutzen die Platten-Ausnehmung bedeckt und das Arbeitsfluid durch die Platten-Ausnehmung fließen kann. Mit anderen Worten kann der Stutzen eine Durchführung aufweisen und derart stoffschlüssig an der einen Wärmetauscherplatte angebracht werden, dass das Arbeitsfluid durch die Platten-Ausnehmung und die Durchführung des Stutzens fließen kann. Der Stutzen kann mit einer der Stutzen-Pressfläche gegenüberliegenden Fläche an der einen Wärmetauscherplatte angebracht werden.

Das stoffschlüssige Anbringen kann insbesondere mittels Schweißen, bevorzugt Laser-Schweißen, oder Löten erfolgen. Dies kann ermöglichen, dass die einzelnen Elemente präzise und insbesondere ohne notwendigen Kontakt beim Anbringen miteinander verbunden werden.

Erfolgt die Platten-Ausnehmung durch Lasern und das Anbringen des Stutzens durch Laser-Schweißen, können diese beiden Schritte einfach in einem einzigen Fertigungsschritt erfolgen, wobei eine möglichst präzise Anordnung und gute Abdichtung ermöglicht werden kann.

Das stoffschlüssige Anbringen kann zudem automatisiert erfolgen.

Ferner kann das Bereitstellen des Wärmetauscherelements weiter umfassen:
stoffschlüssiges Verbinden der Wärmetauscherplatten, insbesondere mittels Schweißen oder Löten, gemäß einer vorbestimmten Verbindungsstruktur, und
Verformen, insbesondere Hydroformen, der stoffschlüssig verbundenen Wärmetauscherplatten durch Fluid-Druckbeaufschlagung durch den Stutzen, um im Innern des Wärmetauscherelements eine Volumen- und/oder Fluidlaufstruktur zu formen.

Hierbei können die Schritte als Teil von Schritt 1) in der folgenden Reihenfolge ausgeführt werden:
1.4) stoffschlüssiges Verbinden der Wärmetauscherplatten, insbesondere mittels Schweißen oder Löten, gemäß einer vorbestimmten Verbindungsstruktur, und
1.5) Verformen, insbesondere Hydroformen, der stoffschlüssig verbundenen Wärmetauscherplatten durch Fluid-Druckbeaufschlagung durch den Stutzen, um im Innern des Wärmetauscherelements eine Volumen- und/oder Fluidlaufstruktur zu formen.
Schritt 1.4) kann hierbei nach oder parallel zu Schritt 1.3) erfolgen.

Das stoffschlüssige Verbinden der Wärmetauscherplatten kann insbesondere mittels Laser-Schweißen erfolgen. Erfolgt auch das Anbringen des Stutzens an der einen Wärmetauscherplatte mittels Schweißen, insbesondere Laser-Schweißen, so können die Schritte einfach, präzise und insbesondere ohne notwendigen Kontakt beim Verschweißen in einem Fertigungsschritt erfolgen.

Das stoffschlüssige Verbinden der Wärmetauscherplatten kann gemäß einer vorbestimmten Verbindungsstruktur erfolgen. Die Verbindungsstruktur kann hierbei eine Punkt-Struktur und/oder eine Linien-Struktur aufweisen. Die Punkt-Struktur und/oder die Linien-Struktur kann hierbei die Volumen- und/oder Fluidlaufstruktur des Wärmetauscherelements vorgeben.

Das stoffschlüssige Verbinden kann zudem automatisiert erfolgen. Somit kann sowohl das Anbringen des Stutzens als auch das Verbinden der Wärmetauscherplatten einfach in einem einzigen automatisierten Fertigungsschritt erfolgen.

Das Verformen der stoffschlüssig verbundenen Wärmetauscherplatten kann durch Fluid-Druckbeaufschlagung durch den Stutzen erfolgen. Mit anderen Worten kann durch den Stutzen hindurch unter Druck stehendes Fluid in das Innere des Wärmetauscherelements derart geführt werden, dass sich die Wärmetauscherplatten verformen.

Hierbei können die Wärmetauscherplatten vor dem Verformen in den Randbereichen dauerhaft oder vorübergehend verbunden sein. Insbesondere kann die Verbindungsstruktur vorgeben, dass die Wärmetauscherplatten, insbesondere in den Randbereichen, fluiddicht nach außen verbunden sind.

Gibt die Verbindungsstruktur vor, dass die Randbereiche verbunden sind, kann in einem einzigen Fertigungsschritt das Wärmetauschermodul, insbesondere automatisiert, für die Verformung vorbereitet werden.

Ein Verformen der Wärmetauscherplatten durch den Stutzen hindurch kann ermöglichen, dass die Wärmetauscherplatten direkt nach dem Verbinden miteinander und dem Verbinden mit dem Stutzen verformt werden, noch bevor das Wärmetauscherelement mit der Fluidleitung verbunden wird. Somit können die Wärmetauscherplatten auf einfache und sichere Weise verformt werden. Weiter kann an den Stutzen einfach eine Fluid-Druckleitung für das Verformen angeschlossen werden, was ein einfaches und sicheres Verformen ermöglicht. Auch kann das verformte Wärmetauscherelement auf Dichtigkeit und/oder korrekte Form geprüft werden, bevor es mit der Fluidleitung verbunden wird.

Ferner kann das Bereitstellen der Fluidleitung umfassen:
Bereitstellen eines Fluidleitungs-Rohlings,
Erzeugen einer, insbesondere kreisförmigen, Leitungs-Ausnehmung in der Wandung des Fluidleitungs-Rohlings, und
stoffschlüssiges Anbringen des Durchgangsrohres in der Leitungs-Ausnehmung, insbesondere mittels Schweißen oder Löten, derart, dass sich das Durchgangsrohr durch die Wandung der Fluidleitung erstreckt und das Arbeitsfluid durch das Durchgangsrohr fließen kann.

Hierbei können die Schritte als Teil von Schritt 2) in der folgenden Reihenfolge ausgeführt werden:
2.1) Bereitstellen eines Fluidleitungs-Rohlings,
2.2) Erzeugen einer, insbesondere kreisförmigen, Leitungs-Ausnehmung in der Wandung des Fluidleitungs-Rohlings, und
2.3) stoffschlüssiges Anbringen des Durchgangsrohres in der Leitungs-Ausnehmung, insbesondere mittels Schweißen oder Löten, derart, dass sich das Durchgangsrohr durch die Wandung der Fluidleitung erstreckt und das Arbeitsfluid durch das Durchgangsrohr fließen kann.

Das Erzeugen der, insbesondere kreisförmigen, Leitungs-Ausnehmung kann mechanisch, insbesondere durch Bohren, Stanzen, Fräsen oder Schneiden, oder thermisch, insbesondere durch Brennen, Schmelzen oder Lasern, erfolgen.

Das stoffschlüssige Anbringen des Durchgangsrohres in der Leitungs-Ausnehmung kann derart erfolgen, dass sich das Durchgangsrohr durch die Wandung der Fluidleitung erstreckt und das Arbeitsfluid durch das Durchgangsrohr fließen kann. Das Arbeitsfluid muss jedoch nicht direkt durch das Durchgangsrohr fließen können, sondern kann auch durch das Schraubenelement und den Stutzen, welche durch das Durchgangsrohr verbunden sein können, fließen. Mit anderen Worten kann das Durchgangsrohr eine Durchführung aufweisen und derart stoffschlüssig an der einen Wärmetauscherplatte angebracht werden, dass der Stutzen und das Schraubenelement durch das Durchgangsrohr hindurch verbindbar sind.

Das stoffschlüssige Anbringen kann insbesondere mittels Schweißen, bevorzugt Laser-Schweißen, oder Löten erfolgen. Dies kann ermöglichen, dass die einzelnen Elemente präzise und insbesondere ohne notwendigen Kontakt beim Verschweißen miteinander verbunden werden können.

Ferner kann durch das Verschrauben des Schraubenelements und des Stutzens die Stutzen-Pressfläche derart an die erste Durchgangsrohr-Pressfläche gepresst werden, dass diese vollumfänglich auf der ersten Durchgangsrohr-Pressfläche fluiddicht aufliegt. Zudem oder alternativ kann durch das Verschrauben des Schraubenelements und des Stutzens die Schraubenelement-Pressfläche derart an die zweite Durchgangsrohr-Pressfläche gepresst werden, dass diese vollumfänglich auf der der zweiten Durchgangsrohr-Pressfläche fluiddicht aufliegt.

Somit kann auf einfache Weise eine fluiddichte und kompakte Verbindung des Wärmetauscherelements und der Fluidleitung geschaffen werden.

Ferner kann das Verfahren einen Schritt des Anordnens eines Gewindedichtmittels an dem Stutzen-Gewinde und/oder dem Schraubenelement-Gewinde, insbesondere als Schritt 4.0) vor Schritt 4), aufweisen. Das Gewindedichtmittel kann hierbei ein organisches Material, wie beispielsweise Hanf, ein synthetisches Material, wie beispielsweise Teflon, und/oder eine, insbesondere aushärtende, Flüssigdichtung, wie beispielsweise einen Gewindekleber, aufweisen oder sein.

Im Folgenden werden Ausführungsformen der vorliegenden Erfindung anhand der beiliegenden Figuren näher beschrieben. Es versteht sich, dass die vorliegende Erfindung nicht auf diese Ausführungsformen beschränkt ist, und dass einzelne Merkmale der Ausführungsformen frei zu weiteren Ausführungsformen kombiniert werden können.
**Figur 1** zeigt einen Ausschnitt eines Wärmetauschermoduls in verbundenem Zustand.
**Figur 2** zeigt den Ausschnitt des Wärmetauschermoduls aus Figur 1 in nicht-verbundenem Zustand.
**Figur 3** zeigt eine teilweise Schnittdarstellung des Wärmetauschermoduls aus Figur 2 in einem anderen nicht-verbundenen Zustand mit teilweiser Schnittdarstellung.
**Figur 4** zeigt eine perspektivische Ansicht des Wärmetauschermoduls aus Figur 3 in nicht-verbundenem Zustand.
**Figur 5** zeigt ein aus dem Stand der Technik bekanntes Wärmetauschersystem, welches

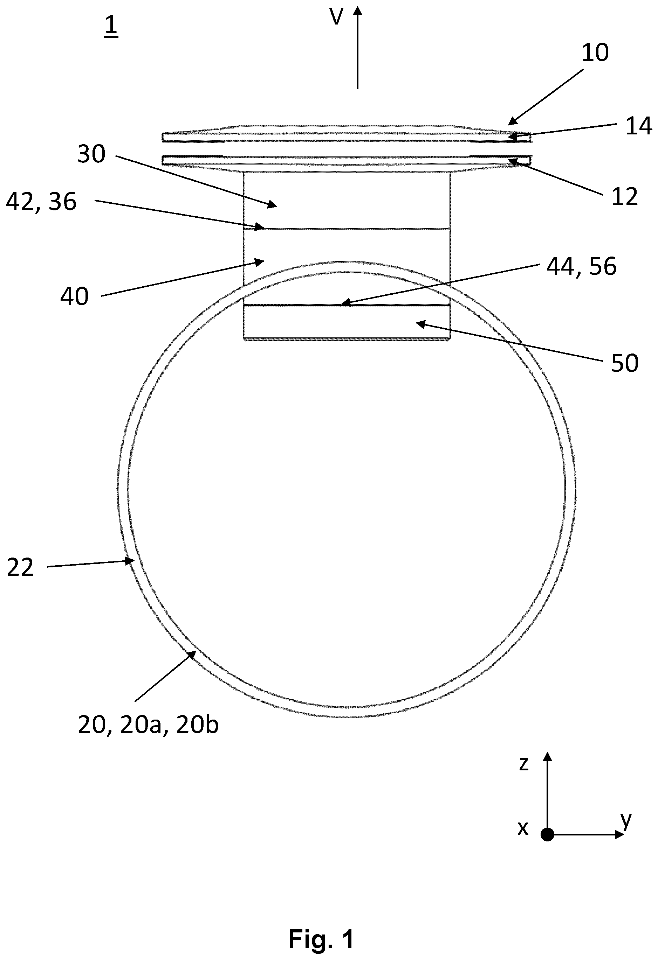

**Figur 1** zeigt ein Wärmetauschermodul 1 mit einer Fluidleitung 20 mit verschweißtem Durchgangsrohr 40, durch welches hindurch ein Schraubenelement 50 und ein Stutzen 30 verschraubt sind. Der Stutzen 30 ist an eine erste Wärmetauscherplatte 12 eines Wärmetauscherelements 10 geschweißt.

Das Durchgangsrohr 40 erstreckt sich durch eine Wandung 22 der Fluidleitung in einer Verbindungsrichtung V. Die Verbindungsrichtung V entspricht einer Radialrichtung der Fluidleitung 20 und ist eine Richtung, entlang welcher der Stutzen 30 und das Schraubenelement 50 durch das Durchgangsrohr 40 hindurch verbunden werden können und, in welche ein Arbeitsfluid von der Fluidleitung in das Wärmetauscherelement 10 fließen kann. Die Fluidleitung 20 kann ein Zuführleitung 20a oder Abführleitung 20b sein. In den Figuren entspricht die Verbindungsrichtung V der Richtung der z-Achse. Die Verbindungsrichtung V verläuft senkrecht zu einer Axialrichtung der Fluidleitung F, welche in den Figuren der Richtung der x-Achse entspricht.

Innerhalb der Fluidleitung 20 ist das Schraubenelement 50 auf einer Seite des Durchgangsrohrs 40 entgegen der Verbindungsrichtung V und an einer zweiten Durchgangsrohr-Pressfläche 44 des Durchgangsrohres 40 anliegend angeordnet. Das Schraubenelement 50 ist derart mit dem Stutzen 30 verschraubt, dass eine Schraubenelement-Pressfläche 56 gegen die zweite Durchgangsrohr-Pressfläche 44 gepresst ist.

Außerhalb der Fluidleitung 20 ist das Wärmetauscherelement 10 mit dem Stutzen 30 derart angeordnet, dass eine Stutzen-Pressfläche 36 des Stutzens 30 an einer ersten Durchgangsrohr-Pressfläche 42 des Durchgangsrohres 40 anliegt. Durch die Verschraubung von Stutzen 30 und Schraubenelement 50 ist die Stutzen-Pressfläche 36 an die erste Durchgangsrohr-Pressfläche 42 gepresst.

Damit sind die Fluidleitung 20 und das Wärmetauscherelement 10 über eine Verbindungskonfiguration fluidisch miteinander verbunden. Durch den Anpressdruck ist die Verbindungskonfiguration nach außen fluiddicht. Hierbei können sowohl die Stutzen-Pressfläche 36 und die erste Durchgangsrohr-Pressfläche 42 als auch die Schraubenelement-Pressfläche 56 und die zweite Durchgangsrohr-Pressfläche 44 derart aufeinandergepresst sein, dass diese fluiddicht aneinander anliegen. Für eine effektive Abdichtung kann es jedoch ausreichen, wenn nur die Stutzen-Pressfläche 36 und die erste Durchgangsrohr-Pressfläche 42 fluiddicht aufeinandergepresst werden.

Das Wärmetauscherelement 10 weist neben der ersten Wärmetauscherplatte 12 eine zweite Wärmetauscherplatte 14 auf, welche in Verbindungsrichtung V von der ersten Wärmetauscherplatte 12 beabstandet ist. Die Darstellung des Wärmetauscherelements 10 ist nur abschnittsweise und schematisch. Eine stoffschlüssige Verbindung der ersten und zweiten Wärmetauscherplatte 12, 14, insbesondere an deren (nicht gezeigten) Randbereichen, ist in den Figuren nicht dargestellt.

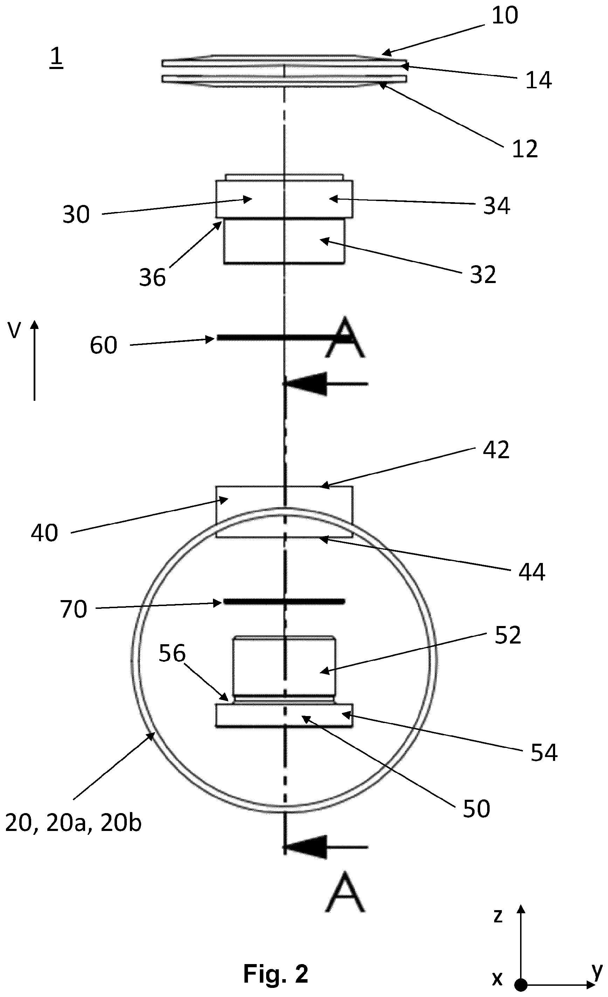

**Figur 2** zeigt das Wärmetauschermodul 1 aus Figur 1 in einem nicht-verbundenen Zustand. Das Schraubenelement 50 ist innerhalb der der Fluidleitung 20 und von dem Durchgangsrohr 40 entgegen der Verbindungsrichtung V beabstandet angeordnet. Zwischen dem Schraubenelement 50 und dem Durchgangsrohr 40 ist ein zweites Dichtelement 70, welches als O-Ring ausgebildet ist, angeordnet. In einem verbundenen Zustand ist das zweite Dichtelement 70 abschnittsweise zwischen der zweiten Durchgangsrohr-Pressfläche 44 und der Schraubenelement-Pressfläche 56 angeordnet und kann eine verbesserte Abdichtung bewirken, wobei der notwendige Anpressdruck reduziert sein kann. Die zweite Durchgangsrohr-Pressfläche 44 und/oder die Schraubenelement-Pressfläche 56 können hierbei eine Nut aufweisen, in welcher das zweite Dichtelement 70 zumindest abschnittsweise angeordnet sein kann.

Das Schraubenelement 50 weist einen Kopfabschnitt 54 und einen Schraubenelement-Einführ-Abschnitt 52 auf, wobei der Außendurchmesser des Schraubenelement-Einführ-Abschnitts 52 kleiner ist als der Außendurchmesser des Kopfabschnitts 54. Die Schraubenelement-Pressfläche 56 ist als Stufe an dem Übergang von dem Kopfabschnitt 54 zu dem Schraubenelement-Einführ-Abschnitt 52 ausgebildet. In verbundenem Zustand ist der Schraubenelement-Einführ-Abschnitt 52 innerhalb der Durchgangsrohres 40 angeordnet. Der Schraubenelement-Einführ-Abschnitts 52 weist ein (nicht dargestelltes) Außengewinde auf.

Der Stutzen 30 ist in nicht mit dem Wärmetauscherelement 10 verbundenem Zustand außerhalb der Fluidleitung 20 angeordnet. Er ist in Verbindungsrichtung V von dem Durchgangsrohr 40 beabstandet. Zwischen dem Stutzen 30 und dem Durchgangsrohr 40 ist ein erstes Dichtelement 60, welches als O-Ring ausgebildet ist, angeordnet. In einem verbundenen Zustand ist das erste Dichtelement 60 abschnittsweise zwischen der ersten Durchgangsrohr-Pressfläche 42 und der Stutzen-Pressfläche 36 angeordnet und kann eine verbesserte Abdichtung bewirken, wobei der notwendige Anpressdruck reduziert sein kann. Die erste Durchgangsrohr-Pressfläche 42 und/oder die Stutzen-Pressfläche 36 können hierbei eine Nut aufweisen, in welcher das erste Dichtelement 60 zumindest abschnittsweise angeordnet sein kann.

Der Stutzen weist einen Stutzen-Anbring-Abschnitt 34 und einen Stutzen-Einführ-Abschnitt 32 auf, wobei der Außendurchmesser des Stutzen-Einführ-Abschnitts 32 kleiner ist als der Außendurchmesser des Stutzen-Anbring-Abschnitts 34. Die Stutzen-Pressfläche 36 ist als Stufe an dem Übergang von dem Stutzen-Anbring-Abschnitt 34 zu dem Stutzen-Einführ-Abschnitt 32 ausgebildet. In verbundenem Zustand ist der Stutzen-Einführ-Abschnitt 32 innerhalb des Durchgangsrohres 40 angeordnet. Der Stutzen-Einführ-Abschnitts 32 weist ein (nicht dargestelltes) Innengewinde auf. Der Stutzen 30 und das Schraubenelement 50 können über das Innengewinde und das Außengewinde miteinander ein Eingriff gebracht und verschraubt werden, um die Stutzen-Pressfläche 36 an die erste Durchgangsrohr-Pressfläche 42 und die Schraubenelement-Pressfläche 56 an die zweite Durchgangsrohr-Pressfläche 44 zu pressen.

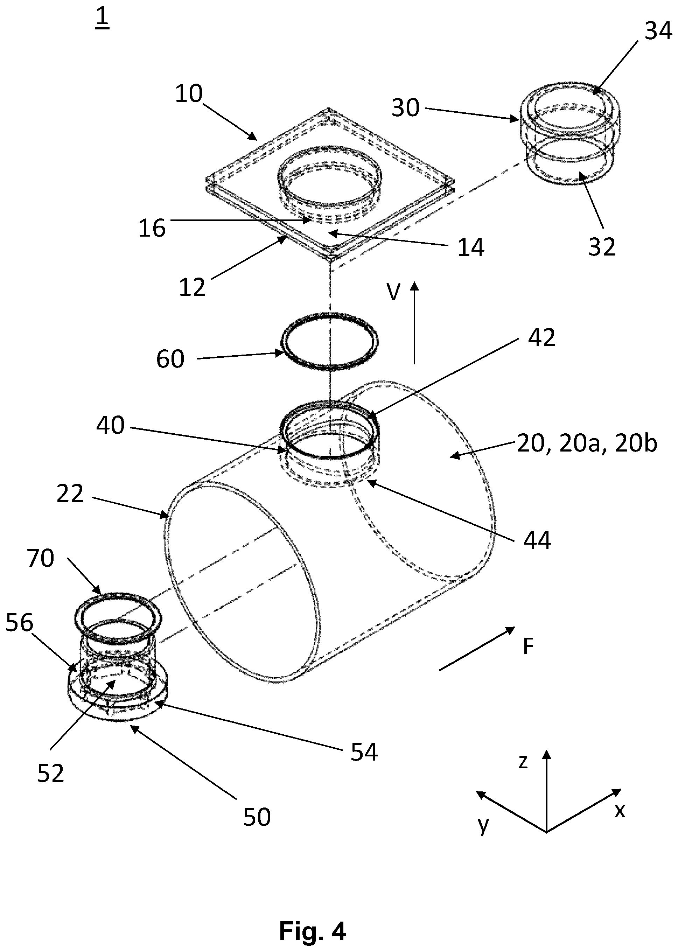

Der Stutzen 30 ist mit dem Stutzen-Anbring-Abschnitt 34 an die erste Wärmetauscherplatte 12 des Wärmetauscherelements 10, welche in Verbindungsrichtung V von dem Stutzen 30 beabstandet angeordnet ist, anbringbar. Der Stutzen weist an dem Stutzen-Anbring-Abschnitt 34 einen Positioniervorsprung auf, welcher in eine Plattenausnehmung 16 der ersten Wärmetauscherplatte 12 (gezeigt in Figur 4) einführbar ist. Dies kann eine korrekte Positionierung des Stutzens 30 für ein Anbringen an dem Wärmetauscherelement 10 vereinfachen.

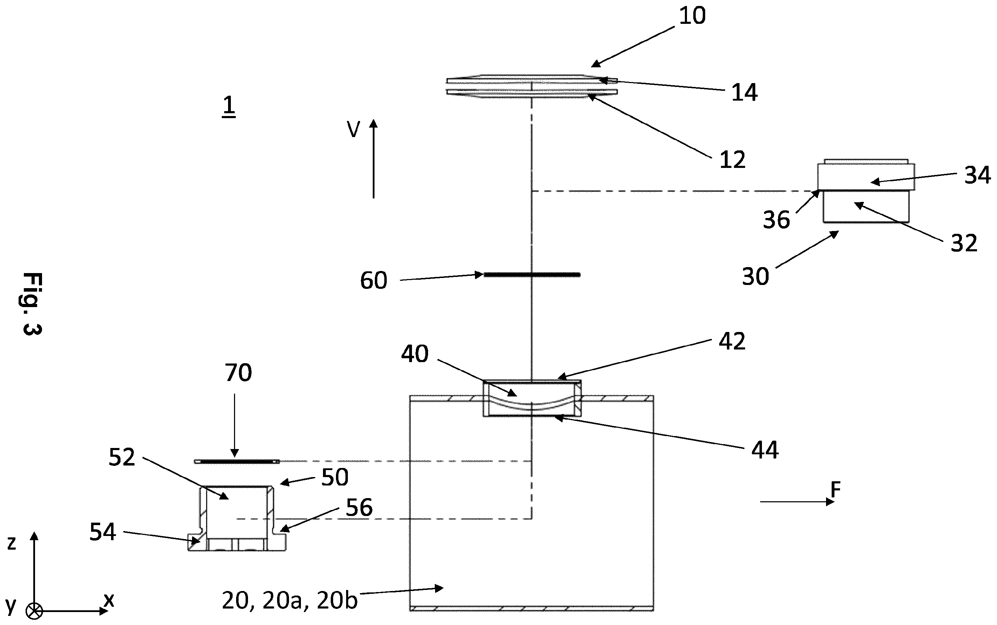

**Figur 3** zeigt das Wärmetauscherelement 1 aus Figur 2 in einem anderen nicht-verbundenem Zustand, wobei die Fluidleitung 20 mit dem Durchgangsrohr 40, das zweite Dichtelement 70 und das Schraubenelement 50 geschnitten (entlang der A-A Schnittlinie aus Figur 2) dargestellt sind.

Das Schraubenelement 50 ist hohlzylinderförmig ausgebildet, sodass in verbundenem Zustand mit dem Stutzen 30 Arbeitsfluid von der Fluidleitung 20 durch das Schraubenelement 50 und durch den Stutzen 30 hindurch in das Wärmetauscherelement 10 (oder in umgekehrter Richtung) fließen kann. Das Schraubenelement 50 weist an einer Innenfläche in dem Kopfabschnitt 54 weiter ein als Innen-Sechskant ausgebildetes Antriebsprofil auf.

Das Durchgangsrohr 40 ist hohlzylinderförmig ausgebildet und die erste Durchgangsrohr-Pressfläche 42 und die zweite Durchgangsrohr-Pressfläche 44 sind als Stirnflächen des Durchgangsrohres 40 ausgebildet. Der Innendurchmesser des Durchgangsrohres 40 entspricht in etwa dem Außendurchmesser des Stutzen-Einführ-Abschnitts 32.

Zum Herstellen des Wärmetauschermoduls 1 kann zunächst der Stutzen 30 an der ersten Wärmetauscherplatte 12 stoffschlüssig, insbesondere mittels Laser-Schweißen, angebracht werden. Hierbei können davor, zeitgleich oder danach die erste Wärmetauscherplatte 12 und die zweite Wärmetauscherplatte 14 stoffschlüssig verbunden werden, insbesondere mittels Laser-Schweißen. Anschließend kann über den Stutzen 30 ein Fluid druckbeaufschlagt in das Wärmetauscherelement 10 geführt werden, um dieses zu verformen.

Zum Verschrauben von Stutzen 30 und Schraubenelement 50 kann der Stutzen 30 entgegen der Verbindungsrichtung V mit dem Stutzen-Einführ-Abschnitt 32 in dem Durchgangsrohr 40 angeordnet werden. Durch den reduzierten Außendurchmesser des Stutzen-Einführ-Abschnitts 32, welcher etwa dem Innendurchmesser des Durchgangsrohres 40 entspricht, kann der Stutzen 30 einfach positioniert werden. Zwischen der Stutzen-Pressfläche 36 und der ersten Durchgangsrohr-Pressfläche 42 wird hierbei das erste Dichtelement 60 angeordnet.

Anschließend wird durch eine Öffnung der Fluidleitung 20 das Schraubenelement 50 in (oder entgegen der) Axialrichtung F in die Fluidleitung 20 eingeführt und in Verbindungsrichtung V durch das Durchgangsrohr 40 mit dem Stutzen 30 verschraubt. Zwischen der Schraubenelement-Pressfläche 56 und der zweiten Durchgangsrohr-Pressfläche 44 wird hierbei das zweite Dichtelement 70 angeordnet.

Vor dem Verschrauben kann ein (nicht gezeigtes) Gewindedichtmittel an dem Innengewinde und/oder dem Außengewinde angebracht werden. So kann weiter eine verbesserte und sichere Abdichtung ermöglicht werden.

Zum Verschrauben kann durch eine Öffnung der Fluidleitung 20 ein geeignetes Werkzeug an des Antriebsprofil des Schraubenelements 50 angelegt werden.

**Figur 4** zeigt eine perspektivische Ansicht des Wärmetauschermoduls 1 aus Figur 3 in nicht-verbundenem Zustand.

Die einzelnen Elemente des Wärmetauschermoduls 1 sind durchsichtig dargestellt, wobei verdeckte Linien und Kanten als gestrichelte Linien dargestellt sind.

Die erste Wärmetauscherplatte 12 weist eine Platten-Ausnehmung 16 auf, welche kreisförmig ausgebildet ist. Zum Anbringen des Stutzens 30 an der ersten Wärmetauscherplatte 12, wird der der Stutzen derart mit dem Stutzen-Anbring-Abschnitt 34 an der Wärmetauscherplatte 12 angeordnet, dass der Stutzen 30 die Platten-Ausnehmung 16 vollständig abdeckt. Eine Positionierung kann hierbei durch den Positionierungsvorsprung des Stutzens 30 vereinfacht werden. Der Durchmesser der Platten-Ausnehmung 16 ist hierbei kleiner als der Außendurchmesser des Stutzen-Anbring-Abschnitts 34. Insbesondere kann der Durchmesser der Platten-Ausnehmung 16 im Wesentlichen dem Außendurchmesser des Positionierungsvorsprungs entsprechen.

### Bezugszeichenliste

- 1: Wärmetauschermodul
- 10: Wärmetauscherelement
- 12: (erste) Wärmetauscherplatte
- 14: (zweite) Wärmetauscherplatte
- 16: Platten-Ausnehmung
- 18: Fluidlaufstruktur
- 20: Fluidleitung
- 20a: Zuführleitung
- 20b: Abführleitung
- 21a: Zuführanschluss
- 21b: Abführanschluss
- 22: Wandung
- 30: Stutzen
- 32: Stutzen-Einführ-Abschnitt
- 34: Stutzen-Anbring-Abschnitt
- 36: Stutzen-Pressfläche
- 40: Durchgangsrohr
- 42: erste Durchgangsrohr-Pressfläche
- 44: zweite Durchgangsrohr-Pressfläche
- 50: Schraubenelement
- 52: Schraubenelement-Einführ-Abschnitt
- 54: Kopfabschnitt
- 56: Schraubenelement-Pressfläche
- 60: (erstes) Dichtungselement
- 70: (zweites) Dichtungselement
- 90: Abwasserrohr
- V: Verbindungsrichtung
- F: Axialrichtung der Fluidleitung

## Patentansprüche

1. Ein Wärmetauschermodul (1) zur Gewinnung von Wärmeenergie aus Abwasser, aufweisend:
ein Wärmetauscherelement (10), das zum Einlegen in ein Abwasserrohr (90) ausgebildet ist und in dem ein Arbeitsfluid fließen kann, und
eine Fluidleitung (20) zum Zuführen oder Abführen des Arbeitsfluids zum oder vom Wärmetauscherelement (10),
wobei das Wärmetauscherelement (10) und die Fluidleitung (20) über eine Verbindungskonfiguration fluidisch miteinander verbindbar sind, wobei die Verbindungskonfiguration aufweist:
einen mit dem Wärmetauscherelement (10) verbundenen Stutzen (30),
ein mit der Fluidleitung (20) verbundenes Durchgangsrohr (40), das sich durch eine Wandung (22) der Fluidleitung (20) erstreckt, und
ein Schraubenelement (50), wobei
der Stutzen (30) ein Stutzen-Gewinde und eine Stutzen-Pressfläche (36) aufweist,
das Durchgangsrohr (40) eine nach außen gerichtete erste Durchgangsrohr-Pressfläche (42) und eine nach innen gerichtete zweite Durchgangsrohr-Pressfläche (44) aufweist,
und das Schraubenelement (50) ein Schraubenelement-Gewinde und eine Schraubenelement-Pressfläche (56) aufweist, und
das Stutzen-Gewinde und das Schraubenelement-Gewinde miteinander in Eingriff bringbar sind, um den Stutzen (30) und das Schraubenelement (50) durch das Durchgangsrohr (40) hindurch miteinander zu verschrauben, so dass die Stutzen-Pressfläche (36) an die erste Durchgangsrohr-Pressfläche (42) gepresst wird und die Schraubenelement-Pressfläche (56) an die zweite Durchgangsrohr-Pressfläche (44) gepresst wird, um das Wärmetauscherelement (10) und die Fluidleitung (20) fluiddicht miteinander zu verbinden.

2. Wärmetauschermodul (1) gemäß Anspruch 1,
wobei der Stutzen (30) mit dem Wärmetauscherelement (10) stoffschlüssig, insbesondere mittels Schweißen oder Löten, verbunden ist, und/oder
wobei das Durchgangsrohr (40) mit der Fluidleitung (20) stoffschlüssig, insbesondere mittels Schweißen oder Löten, verbunden ist.

3. Wärmetauschermodul (1) gemäß Anspruch 1 oder 2, wobei
der Stutzen (30) stufenförmig mit einer Stufe ausgebildet ist,
die Stufe die Stutzen-Pressfläche (36) bildet, und
der Stutzen (30) einen Stutzen-Einführ-Abschnitt (32) mit einem Gewinde und mit reduziertem Durchmesser aufweist, welcher in das Durchgangsrohr (40) einführbar ist.

4. Wärmetauschermodul (1) gemäß einem der vorangegangenen Ansprüche,
wobei das Schraubenelement (50) einen Schraubenelement-Einführ-Abschnitt (52) mit einem Gewinde und einen Kopfabschnitt (54) aufweist, und
wobei an dem Übergang von dem Schraubenelement-Einführ-Abschnitt (52) zu dem Kopfabschnitt (54) die Schraubenelement-Pressfläche (56) ausgebildet ist.

5. Wärmetauschermodul (1) gemäß einem der vorangegangenen Ansprüche, wobei der Stutzen (30) ein Innengewinde und das Schraubenelement (50) ein Außengewinde aufweist.

6. Wärmetauschermodul (1) gemäß einem der vorangegangenen Ansprüche, wobei zwischen der Stutzen-Pressfläche (36) und der ersten Durchgangsrohr-Pressfläche (42) und/oder zwischen der Schraubenelement-Pressfläche (56) und der zweiten Durchgangsrohr-Pressfläche (44) jeweils ein Dichtungselement (60, 70) anordenbar ist.

7. Wärmetauschermodul (1) gemäß einem der vorangegangenen Ansprüche, wobei
die eine Fluidleitung (20) eine Zuführleitung (20a) zum Zuführen des Arbeitsfluids zum Wärmetauscherelement (10) ist,
das Wärmetauschermodul (1) weiter eine Abführleitung (20b) zum Abführen des Arbeitsfluids vom Wärmetauscherelement (10) aufweist, und
wobei das Wärmetauscherelement (10) und die Abführleitung (20) über eine weitere Verbindungskonfiguration fluidisch miteinander verbindbar sind.

8. Wärmetauschermodul (1) gemäß einem der vorangegangenen Ansprüche, wobei die erste Durchgangsrohr-Pressfläche (42) und/oder die zweite Durchgangsrohr-Pressfläche (44) als eine Stirnfläche des Durchgangsrohres (40) ausgebildet ist.

9. Wärmetauschermodul (1) gemäß einem der vorangegangenen Ansprüche, wobei ein Abstand zwischen der Fluidleitung (20) und dem Wärmetauscherelement (10) in einem fluiddicht verbundenen Zustand kleiner als etwa 2 cm, kleiner als etwa 1,5 cm, kleiner als etwa 1 cm, oder kleiner als etwa 0,5 cm ist.

10. Wärmetauschersystem zur Gewinnung von Wärmeenergie aus Abwasser, aufweisend zwei oder mehr Wärmetauschermodule (1) gemäß einem der vorangegangenen Ansprüche, wobei die zwei oder mehr Wärmetauschermodule (1) parallel und/oder in Reihe verbindbar sind.

11. Verfahren zum Herstellen eines Wärmetauschermoduls (1) zur Gewinnung von Wärmeenergie aus Abwasser, aufweisend die Schritte:
Bereitstellen eines Wärmetauscherelements (10), das zum Einlegen in ein Abwasserrohr (90) ausgebildet ist und in dem ein Arbeitsfluid fließen kann, wobei das Wärmetauscherelement (10) einen Stutzen (30) aufweist und der Stutzen (30) ein Stutzen-Gewinde und eine Stutzen-Pressfläche (36) aufweist,
Bereitstellen einer Fluidleitung (20) zum Zuführen oder Abführen des Arbeitsfluids zum oder vom Wärmetauscherelement (10), wobei die Fluidleitung (20) ein Durchgangsrohr (40) aufweist, das sich durch eine Wandung (22) der Fluidleitung (20) erstreckt, und wobei das Durchgangsrohr (40) eine nach außen gerichtete erste Durchgangsrohr-Pressfläche (42) und eine nach innen gerichtete zweite Durchgangsrohr-Pressfläche (44) aufweist,
Bereitstellen eines Schraubenelements (50), wobei das Schraubenelement (50) ein Schraubenelement-Gewinde und eine Schraubenelement-Pressfläche (56) aufweist und wobei das Stutzen-Gewinde und das Schraubenelement-Gewinde miteinander in Eingriff bringbar sind, und
Verschrauben des Schraubenelements (50) und des Stutzens (30) miteinander durch das Durchgangsrohr (40) hindurch, so dass die Stutzen-Pressfläche (36) an die erste Durchgangsrohr-Pressfläche (42) gepresst wird und die Schraubenelement-Pressfläche (56) an die zweite Durchgangsrohr-Pressfläche (44) gepresst wird, um das Wärmetauscherelement (10) und die Fluidleitung (20) fluiddicht miteinander zu verbinden.

12. Verfahren gemäß Anspruch 11, wobei das Bereitstellen des Wärmetauscherelements (10) umfasst:
Bereitstellen von zumindest zwei Wärmetauscherplatten (12, 14),
Erzeugen einer, insbesondere kreisförmigen, Platten-Ausnehmung (16) in einer der Wärmetauscherplatten (12, 14), und
stoffschlüssiges Anbringen des Stutzens (30) an der einen Wärmetauscherplatte (12) derart, dass der Stutzen (30) die Platten-Ausnehmung (16) bedeckt und das Arbeitsfluid durch die Platten-Ausnehmung (16) und den Stutzen (30) fließen kann.

13. Verfahren gemäß Anspruch 12, wobei das Bereitstellen des Wärmetauscherelements (10) weiter umfasst:
stoffschlüssiges Verbinden der Wärmetauscherplatten (12, 14), insbesondere mittels Schweißen oder Löten, gemäß einer vorbestimmten Verbindungsstruktur, und
Verformen der stoffschlüssig verbundenen Wärmetauscherplatten (12, 14) durch Fluid-Druckbeaufschlagung durch den Stutzen (30), um im Innern des Wärmetauscherelements (10) eine Volumen- und/oder Fluidlaufstruktur zu formen.

14. Verfahren gemäß einem der Ansprüche 11 bis 13, wobei das Bereitstellen der Fluidleitung (20) umfasst:
Bereitstellen eines Fluidleitungs-Rohlings,
Erzeugen einer, insbesondere kreisförmigen, Leitungs-Ausnehmung in der Wandung (22) des Fluidleitungs-Rohlings, und
stoffschlüssiges Anbringen des Durchgangsrohres (40) in der Leitungs-Ausnehmung, insbesondere mittels Schweißen oder Löten, derart, dass sich das Durchgangsrohr (40) durch die Wandung (22) der Fluidleitung (20) erstreckt und das Arbeitsfluid durch das Durchgangsrohr (40) fließen kann.

15. Verfahren nach einem der Ansprüche 11 bis 14, wobei durch das Verschrauben des Schraubenelements (50) und des Stutzens (30)
die Stutzen-Pressfläche (36) derart an die erste Durchgangsrohr-Pressfläche (42) gepresst wird, dass diese vollumfänglich auf der ersten Durchgangsrohr-Pressfläche (42) fluiddicht aufliegt, und/oder
die Schraubenelement-Pressfläche (56) derart an die zweite Durchgangsrohr-Pressfläche (44) gepresst wird, dass diese vollumfänglich auf der der zweiten Durchgangsrohr-Pressfläche (44) fluiddicht aufliegt.
